(19) Europäisches Patentamt
European Patent Office
Office européen des brevets

(11) **EP 2 976 554 B1**

(12) **FASCICULE DE BREVET EUROPEEN**

(45) Date de publication et mention de la délivrance du brevet:
**19.02.2020 Bulletin 2020/08**

(21) Numéro de dépôt: **14713557.8**

(22) Date de dépôt: **12.03.2014**

(51) Int Cl.:
*F16H 61/04* (2006.01)    *F16H 63/50* (2006.01)

(86) Numéro de dépôt international:
**PCT/FR2014/050559**

(87) Numéro de publication internationale:
**WO 2014/147322 (25.09.2014 Gazette 2014/39)**

(54) **PROCÉDÉ ET DISPOSITIF DE SYNCHRONISATION D'UN PIGNON FOU DE BOITE DE VITESSE SUR SON ARBRE**

VERFAHREN UND VORRICHTUNG ZUR SYNCHRONISATION EINES LOSRADRITZELS EINES GETRIEBES MIT EINER WELLE DAFÜR

METHOD AND DEVICE FOR SYNCHRONISING AN IDLER PINION OF A GEARBOX WITH THE SHAFT THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.03.2013 FR 1352428**

(43) Date de publication de la demande:
**27.01.2016 Bulletin 2016/04**

(73) Titulaire: **RENAULT s.a.s.**
**92100 Boulogne-Billancourt (FR)**

(72) Inventeur: **MALOUM, Abdelmalek**
**F-94550 Chevilly-Larue (FR)**

(56) Documents cités:
**EP-A2- 0 928 715        WO-A1-2012/131259**
**DE-A1-102006 003 715    FR-A1- 2 785 238**
**FR-A1- 2 933 247        US-A1- 2007 205 036**
**US-A1- 2008 314 176**

**Description**

La présente invention se rapporte au domaine de la commande des passages de vitesses sur une boîte de vitesses.

Plus précisément, elle a pour objet un procédé et un dispositif de synchronisation du régime commun de deux arbres primaires concentriques d'une transmission hybride recevant de façon cumulative le couple d'un moteur thermique et le couple d'une machine électrique dans un mode de fonctionnement hybride où ces deux arbres sont liés en rotation par un premier moyen d'accouplement, avec le régime d'un arbre secondaire de transmission portant au moins un pignon fou. La synchronisation proposée permet l'accouplement d'un de ces pignons sur son arbre, par fermeture d'un deuxième moyen de couplage dépourvu d'organes de synchronisation mécaniques.

DE 10 2006 003715 divulgue les caractéristiques du préambule des revendications 1 et 6. Cette invention trouve une application non limitative sur une transmission hybride pour véhicule automobile muni d'un moteur thermique et d'une machine électrique d'entraînement, comportant deux arbres primaires concentriques portant chacun au moins un pignon de descente sur un arbre secondaire relié aux roues du véhicule et un premier moyen de couplage entre deux arbres primaires pouvant occuper trois positions, dans lesquelles : le moteur thermique est découplé de la chaîne cinématique reliant la machine électrique aux roues, il entraîne les roues avec ou sans l'appoint de la machine électrique, ou il est couplé à la machine électrique pour additionner leurs couples.

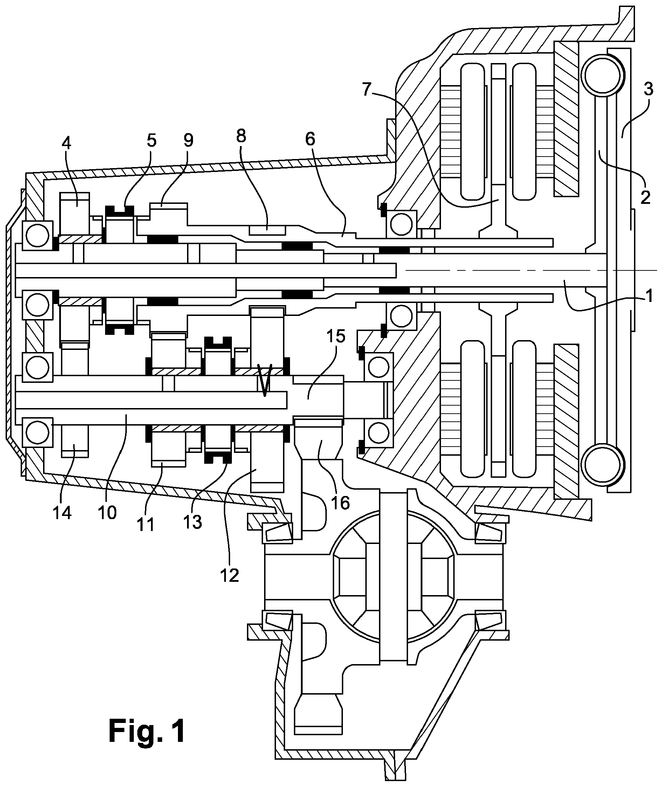

La figure 1 décrit un exemple non limitatif de transmission hybride relevant de ce principe d'architecture. Cette transmission, illustrée par la publication WO2012/131259, comporte un arbre primaire plein 1 connecté directement par l'intermédiaire d'un système de filtration (moyeu amortisseur, « damper », double volant ou autre) 2, au volant d'inertie 3 d'un moteur thermique (non représenté). L'arbre plein 1 porte un pignon fou 4 pouvant être connecté avec celui-ci par un premier système de couplage 5 (crabot, synchroniseur, ou autre type de coupleur progressif ou non). Un arbre primaire creux 6 est relié au rotor d'une machine électrique 7. L'arbre creux 6 porte deux pignons fixes 8, 9. Il peut être relié à l'arbre primaire plein 1 par l'intermédiaire du premier système de couplage 5. Un arbre secondaire 10 porte deux pignons fous 11 et 12. On peut relier les pignons fous 11, 12 à l'arbre primaire par l'intermédiaire d'un deuxième système de couplage 13 (crabot, synchroniseur, ou autre type de coupleur progressif ou non). L'arbre secondaire 10 porte également un pignon fixe 14 et un pignon de descente 15 vers un différentiel 16 relié aux roues du véhicule.

Comme indiqué plus haut, le premier moyen de couplage 5 peut occuper au moins trois positions dans lesquelles :

- le moteur thermique est découplé de la chaîne cinématique reliant la machine électrique 7 aux roues, (baladeur au centre comme sur les figures 1, 2 et 3),
- le moteur thermique entraîne les roues avec ou sans l'appoint de la machine électrique (baladeur à gauche), et
- le moteur thermique et la machine électrique 7 sont couplés de manière à additionner en direction des roues leurs couples respectifs (baladeur à droite).

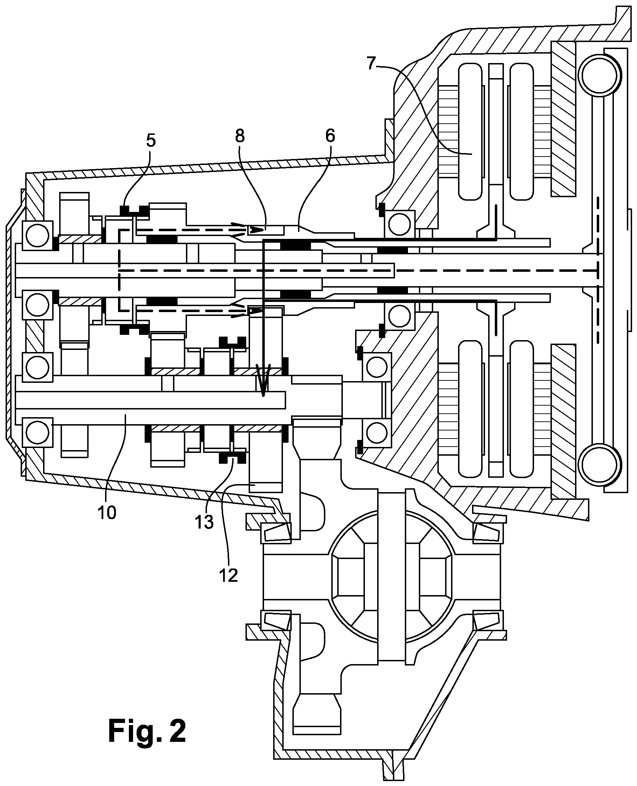

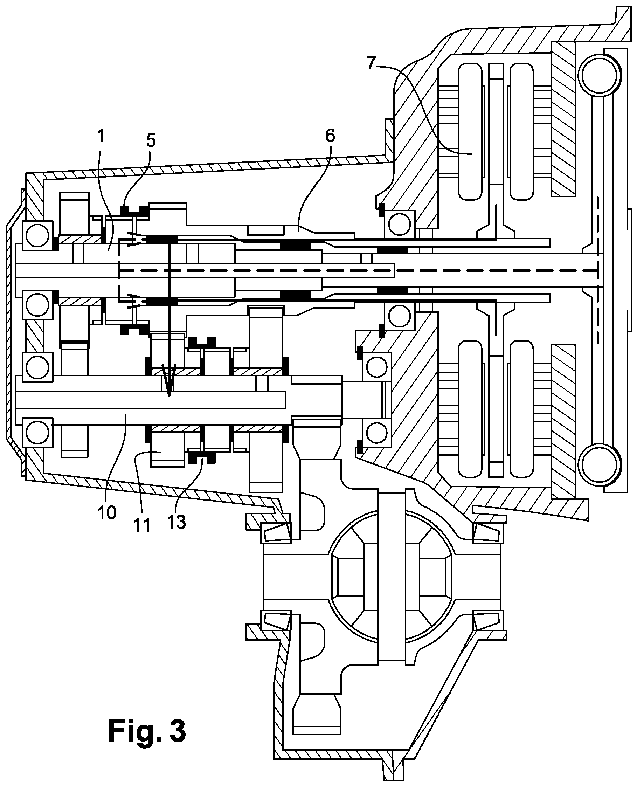

En mode hybride (cf. figures 2 et 3), la machine électrique entraîne l'arbre primaire creux 6, tandis que l'arbre plein reçoit le couple du moteur thermique. La boîte dispose de deux rapports hybrides dits « ville » et « route », selon que le couple descend sur l'arbre secondaire 10 par les pignons fixes 8 ou 9. Pour passer de l'un à l'autre de ces deux rapports, la boîte dispose du deuxième système de couplage 13. En l'absence d'anneaux de synchronisation, un système de couplage par crabotage de baladeur sur les pignons, nécessite un contrôle précis du régime primaire par la machine électrique et ou le moteur thermique, afin d'éviter les à-coups de couple.

Par la publication FR 2 933 247, on connaît un procédé d'accouplement entre un arbre d'une machine électrique et un arbre de roues pour véhicule électrique ou hybride. Le procédé décrit comporte les étapes suivantes :

- on fournit à la machine électrique une consigne de régime correspondant à la vitesse de l'arbre de roues, au rapport de démultiplication près, entre l'arbre de la machine électrique et l'arbre de roues,
- lorsque la vitesse de l'arbre de la machine électrique atteint un seuil calibrable, on lui applique un couple nul, et on actionne un dispositif de synchronisation mécanique, de manière à égaliser la vitesse de l'arbre de la machine électrique avec la vitesse de l'arbre lié aux roues, et
- dès que la vitesse de l'arbre de la machine électrique est égale à la vitesse de l'arbre lié aux roues (au rapport de démultiplication près), on effectue le crabotage.

Selon cette méthode, la machine électrique est pilotée dans un premier temps pour atteindre une vitesse proche, mais pas exactement égale, à celle de l'arbre lié aux roues ; un dispositif de synchronisation termine ensuite l'égalisation des vitesses entre les deux arbres, puis le crabotage final du rapport de vitesse est effectué.

Il a déjà été proposé de synchroniser des pignons fous sur un arbre de boîte de vitesses sans organe de synchronisation mécanique, en pilotant simplement le couple transmis à ces pignons pour égaliser leur vitesse avec l'arbre avant l'accouplement mécanique.

Toutefois, dans le cas d'une boîte de vitesses de véhicule hybride à arbres primaires concentriques, entraînés par deux sources motrices distinctes, mais reliés entre eux par un moyen de couplage, l'inertie entraînée par la machine pendant certaines phases de changement de rapport en mode hybride, inclut le moteur thermique. L'inertie entraînée par la machine électrique est alors multipliée momentanément par un facteur dix, ce qui entraîne des saturations de couple pour celle-ci.

La stratégie de contrôle proposée a pour but de rendre la phase d'accouplement des pignons sur leur arbre, la plus transparente possible.

Elle vise pour cela à assurer une dé-saturation du couple de la machine électrique de manière transparente pour le conducteur, dont la demande de couple doit continuer à être satisfaite pendant tout le passage de vitesse.

Dans ce but, l'invention prévoit que le couple de la machine électrique soit temporairement allégé pendant la phase de synchronisation pour satisfaire les conditions d'un parfait accouplement lorsque sa valeur plafonne sur une valeur limite supérieure ou une valeur limite inférieure.

Le dispositif correspondant comporte à cet effet au moins deux blocs dé-saturateurs du couple de commande de la machine électrique permettant d'alléger temporairement pendant la phase de synchronisation le couple de la machine électrique, pour satisfaire les conditions d'un parfait accouplement en toutes circonstances.

La présente invention sera mieux comprise à la lecture de la description suivante d'un mode de réalisation non limitatif de celle-ci, en se reportant aux dessins annexée, sur lesquels :

- les figures 1, 2 et 3, montrent la chaîne cinématique d'une transmission hybride au neutre et sur ses deux rapports hybrides,

  - la figure 4 décrit le dispositif de synchronisation,
  - la figure 5 est le régulateur de la figure 4,
  - les figures 6 et 7 sont respectivement le premier et le second dé-saturateur de la figure 4,
  - la figure 8 illustre les résultats de la méthode proposée, et
  - la figure 9 est un autre système de désaturation.

Sur la figure 2, le premier moyen de couplage 5 est fermé en position 3, de manière à rendre solidaire l'arbre plein 1, de l'arbre creux 6. Le deuxième système de couplage 13 est fermé, de manière à rendre solidaire le pignon fou du rapport court 12, et l'arbre secondaire 10. La transmission est en mode hybride sur le rapport court. Les apports du moteur thermique et de la machine électrique sur la chaîne de traction se cumulent. Ils sont transmis de l'arbre primaire creux 6 sur l'arbre secondaire par la descente de pignons 8, 12.

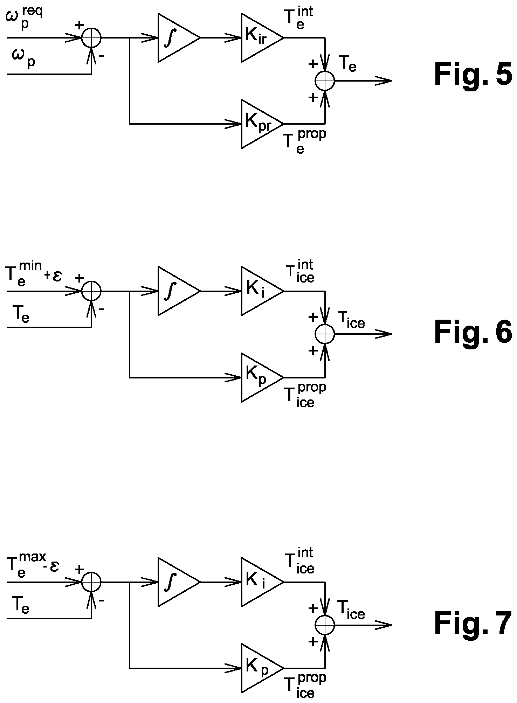

Sur la figure 3, le premier moyen de couplage 5 est toujours fermé, en position 3, comme sur la figure 5. L'arbre primaire plein 1 est donc solidaire de l'arbre primaire creux 6. Le deuxième système de couplage 13 est également fermé : le pignon fou 11 du rapport intermédiaire est solidaire de l'arbre secondaire 10. La transmission est en mode hybride sur le rapport intermédiaire. Les apports du moteur thermique et de la machine électrique sur la chaîne de traction se cumulent.

La synchronisation recherchée est celle du régime commun $\omega_p$ des deux arbres primaires concentriques 1, 6, recevant de façon cumulative le couple $T_{ice}$ du moteur thermique et le couple $T_e$ de la machine électrique 7 dans un mode de fonctionnement hybride où ces deux arbres sont liés en rotation par le premier moyen d'accouplement 5, avec le régime $\omega_s$ de l'arbre secondaire de transmission 10 qui porte les pignons fou 11, 12. Elle doit permettre l'accouplement d'un de ces pignons sur son arbre 10 par simple fermeture du deuxième moyen de couplage 13, qui est dépourvu d'organes de synchronisation.

Comme indiqué plus haut, en l'absence de moyens mécaniques de synchronisation, la synchronisation des pignons fous 11 ou 12 avant leur crabotage sur l'arbre 10 peut être assurée en ajustant le couple fourni par la machine électrique. C'est le cas lors des passages entre les deux rapports hybrides, qui s'effectuent en rupture de couple par le crabotage des pignons 11 et 12 sur l'arbre secondaire 10. Les principales difficultés à surmonter pour réaliser ces passages de vitesses sont :

- d'assurer le suivi de trajectoires de type « rampe », correspondant au cas défavorable de freinage appuyé en forte descente,
- d'avoir suffisamment de précision statique, pour que l'écart de régime diminue très rapidement jusqu'à environ 30 tours par minute (condition nécessaire à la bonne réalisation du crabotage),
- de dé-saturer le couple électrique le plus rapidement possible, car dans cette phase le système est susceptible de devenir incontrôlable, et
- d'éliminer les principales sources d'à-coups de couple susceptible d'être engendrés lors de la phase de l'accouplement, ce qui évite aussi la mauvaise usure des pièces mécaniques du système de l'accouplement.

En appelant $\omega_e$ : le régime de la machine électrique, $T_e$ : le couple de la source d'énergie électrique et $J_e$ : l'inertie de la machine électrique, la dynamique de la machine électrique peut s'écrire de la manière suivante :

$$J_e \dot{\omega}_e = T_e + T_{de},$$

expression dans laquelle $T_{de}$ : est le couple résistant de la source d'énergie électrique, qui est une entrée exogène inconnue.
De la même façon, la dynamique du moteur thermique s'écrit :

$$J_{ice}\dot{\omega}_{ice} = T_{ice} + T_{dice} \ ;$$
$$(2)$$

où $J_{ice}$ : est l'inertie du moteur thermique ; $\omega_{ice}$ : est le régime du moteur thermique ; $\omega_{ice}$ : est le régime du moteur thermique, $T_{ice}$ est le couple du moteur thermique, et $T_{dice}$ : est le couple résistant de la source d'énergie thermique, qui est une entrée exogène inconnue.

Etant donné que, pendant les passages de vitesses en mode hybride concernés, $\omega_e = \omega_{ice} = \omega_p$ (régime primaire), on peut écrire :

$$\left(J_{ice} + J_e\right)\dot{\omega}_p = T_e + T_{ice} + T_{dice} + T_{de}$$

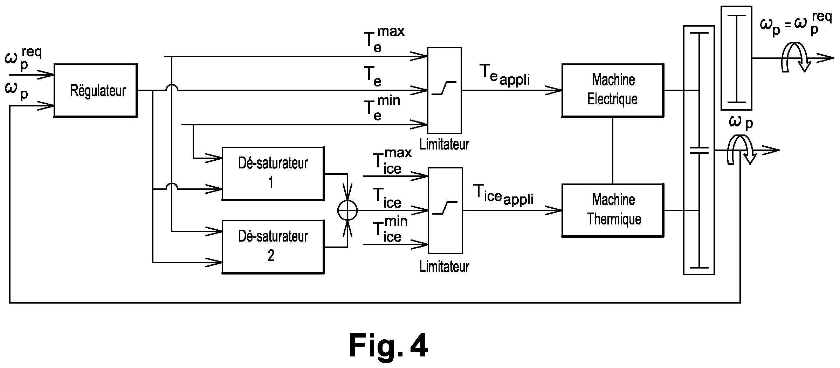

Sur la figure 4, $\omega_P$ est toujours le régime primaire lié aux sources d'énergie, et $\omega_s$ le régime de l'arbre secondaire lié aux roues du véhicule. Le régulateur reçoit en entrée la valeur courante $\omega_P$ du régime primaire et la requête de régime synchronisation égale au régime secondaire au rapport de réduction K près, entre l'arbre primaire et secondaire dans le fonctionnement hybride. Le régulateur envoie la consigne de couple électrique $T_e$ au premier bloc de limitation, ou limitateur, qui maintient la requête de couple électrique $T_e^{appli}$, entre $T_e^{min}$, couple minimum de machine électrique et $T_e^{max}$, couple maximum de la machine électrique.

Les valeurs $T_e^{min}$ et $T_e^{max}$ sont envoyées respectivement au dé-saturateur bas (1) et au dé-saturateur haut (2). En cas de saturation basse ou haute du signal de couple électrique $T_e$, les dé-saturateurs envoient au moteur thermique une consigne de couple $T_{ice}$, limitée par le deuxième limitateur entre des valeurs minimum et maximum ( $T_{ice}^{\min}$ : Couple min de la source d'énergie thermique et $T_{ice}^{\max}$ : Couple max de la source d'énergie thermique). Le deuxième limiteur délivre la consigne de couple appliquée au moteur thermique, $T_{ice}^{appli}$.

Le dispositif de la figure 4 comporte deux blocs dé-saturateurs, intervenant sur la valeur du couple $T_{ice}$ fourni par le moteur thermique. Il permet de dé-saturer le couple de la machine électrique en activant les blocs dé-saturateurs 1 et 2, de manière à additionner un couple thermique de « désaturation », à la machine électrique, lorsque le couple $T_e$ plafonne à sa valeur minimum $T_e^{min}$ (dé-saturateur 1) ou à sa valeur maximum $T_e^{max}$ (dé-saturateur 2).

Ce dispositif allège le couple électrique, lors de la phase de la synchronisation du régime de l'arbre primaire $\omega_p$ et celui de l'arbre secondaire $\omega_s$, au rapport de démultiplication K près, pour satisfaire les conditions d'un parfait accouplement d'un pignon 11 ou 12 sur l'arbre 10.

Le bloc régulateur de la figure 5 compare la requête de régime primaire au régime primaire $\omega_p$. Une valeur d'intégrale de la différence est introduite dans le calcul pour éliminer les erreurs statiques. Pour produire le signal $T_e$ de référence, on somme les signaux engendrés par l'action intégrale $T_e^{int}$ et l'action proportionnelle $T_e^{prop}$.

On compare ensuite le couple $T_e$ produit par le bloc régulateur de la figure 5 au couple minimum $T_e^{\min}$, et au couple maximum $T_e^{\max}$. Si $T_e \leq T_e^{\min}$, on active le bloc dé-saturateur 1 de la figure 6 (où $K_p$, et $K_i$ sont des gains calibrables), de manière à freiner aussi avec le moteur thermique jusqu'à ce que le couple $T_e$ devienne supérieur au couple minimum $T_e^{\min}$, en produisant un signal de référence $T_{ice}$. Pour produire ce signal de référence, on somme les signaux engendrés par l'action intégrale « $T_{ice}^{\text{int}}$ » et l'action proportionnelle « $T_{ice}^{prop}$ » (cf. figure 6). Le couple de la machine électrique 7 est ainsi allégé en intervenant sur la valeur du couple $T_{ice}$ fourni par le moteur thermique.

Si $T_e \geq T_e^{\max}$, on active le bloc dé-saturateur 2 de la figure 7 (où $K_p$, et $K_i$ sont également des gains calibrables), de manière à accélérer aussi avec le moteur thermique jusqu'à ce que le couple $T_e$ devienne inférieur au couple max $T_e^{\max}$, en produisant un signal de référence $T_{ice}$. Pour produire ce signal de référence, on somme les signaux engendrés par l'action intégrale $T_{ice}^{\text{int}}$, et par l'action proportionnelle $T_{ice}^{prop}$ (cf. figure 7).

En d'autres termes, le couple $T_e$ de la machine électrique est temporairement allégé pendant la phase de synchronisation pour satisfaire les conditions d'un parfait accouplement lorsque sa valeur plafonne sur une valeur limite supérieure $T_e^{max}$ ou une valeur limite inférieure $T_e^{min}$.

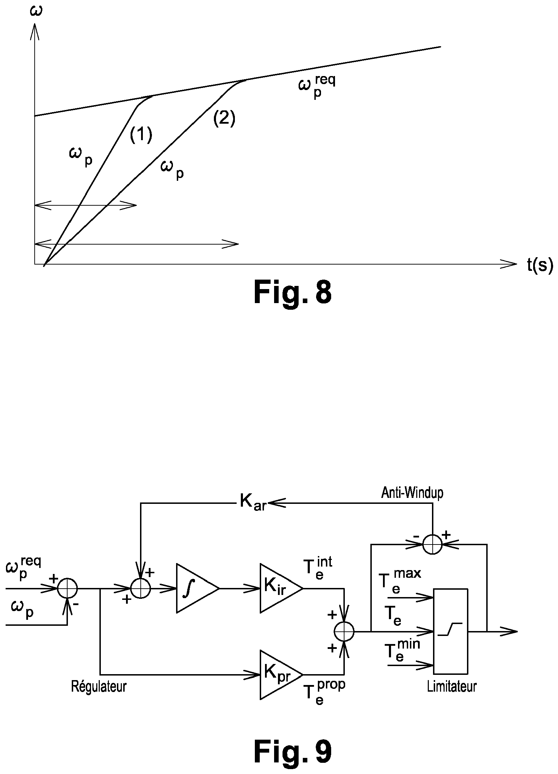

La figure 8 met en évidence le gain de temps procuré de l'invention pour effectuer la synchronisation. Sur ce schéma, on voit que le régime primaire rejoint la valeur requise $\omega_p^{rq}$ au moins une seconde plus tôt avec la stratégie proposée (courbe 1), qu'en l'absence ce celle-ci (courbe 2).

Les avantages du procédé de l'invention sont nombreux. Parmi ceux-ci, on peut noter qu'il répond aux contraintes fondamentales de la boite concernée, qui sont :

- de pouvoir suivre des trajectoires de type « rampe » en fortes descentes, correspondant aux cas défavorables de freinage appuyé,
- d'avoir la précision statique requise, pour que l'écart de régime arrive très rapidement dans une gamme de 30 tours par minute, et
- de dé-saturer le couple électrique le plus rapidement possible, car dans cette phase le système est susceptible de devenir incontrôlable.

Enfin, il faut souligner que les stratégies de désaturation généralement appliquées dans les systèmes de contrôle sont de type « *anti-windup* », comme pourrait l'être celle de la figure 9, où l'écart entre le signal de couple électrique avant et après sa limitation, est renvoyé en boucle dans le régulateur.

La grande différence entre la stratégie proposée et ce type de régulation, réside dans le fait que la désaturation n'est pas strictement logicielle, mais qu'on désature la machine électrique par une autre source d'énergie, telle que le moteur thermique.

## Revendications

**1.** Procédé de synchronisation du régime commun ($\omega_p$) de deux arbres primaires concentriques (1, 6) d'une transmission hybride recevant de façon cumulative le couple ($T_{ice}$) d'un moteur thermique et le couple ($T_e$) d'une machine électrique (7) dans un mode de fonctionnement hybride où ces deux arbres sont liés en rotation par un premier moyen d'accouplement (5), avec le régime ($\omega_s$) d'un arbre secondaire de transmission (10) portant au moins un pignon fou, pour permettre l'accouplement d'un de ces pignons (11, 12) sur son arbre (10) par fermeture d'un deuxième moyen de couplage (13) dépourvu d'organes de synchronisation mécanique , **caractérisé en ce que** le couple ($T_e$) de la machine électrique est temporairement allégé pendant la phase de synchronisation lorsque sa valeur plafonne sur une valeur limite supérieure ($T_e^{max}$) ou une valeur limite inférieure ($T_e^{min}$).

**2.** Procédé de synchronisation selon la revendication 1, **caractérisé en ce que** le couple de la machine électrique (7) est allégé en intervenant sur la valeur du couple ($T_{ice}$) fourni par le moteur thermique.

**3.** Procédé de synchronisation selon la revendication 1 ou 2, **caractérisé en ce que** si le couple ($T_e$) demandé à la machine électrique (7) est inférieur à un couple minimum $( T_e^{\min} )$ on freine les arbres primaires (1, 6) avec le moteur thermique.

**4.** Procédé de synchronisation selon la revendication 2 ou 3, **caractérisé en ce que** si le couple ($T_e$) demandé à la machine électrique (7) est supérieur à un couple maximum $( T_e^{\max} )$, on accélère les arbres primaires (1, 6) avec le moteur thermique.

**5.** Procédé de synchronisation selon la revendication 3 ou 4, **caractérisé en ce qu'**on active un bloc désaturateur pour freiner ou d'accélérer le moteur thermique.

**6.** Dispositif de synchronisation du régime commun ($\omega_p$) de deux arbres primaires concentriques (1, 6) d'une transmission hybride recevant de façon cumulative le couple ($T_{ice}$) d'un moteur thermique et le couple ($T_e$) d'une machine électrique (7) dans un mode de fonctionnement hybride où ces deux arbres sont liés en rotation par un premier moyen d'accouplement (5), avec le régime ($\omega_s$) d'un arbre secondaire de transmission (10) portant au moins un pignon fou, pour permettre l'accouplement d'un de ces pignons (11, 12) sur son arbre (10) par fermeture d'un deuxième moyen de couplage (13) dépourvu d'organes de synchronisation mécanique , **caractérisé en ce qu'**il comporte deux blocs dé-saturateurs intervenant sur la valeur du couple ($T_{ice}$) fourni par le moteur thermique pour alléger temporairement le couple ($T_e$) de la machine électrique pendant la phase de synchronisation.

**7.** Dispositif de synchronisation selon la revendication 6, **caractérisé en ce que** les blocs dé-saturateurs allègent le couple de la machine électrique (7) en intervenant sur la valeur du couple, si le couple ($T_e$) demandé à la machine électrique (7) est supérieur à un couple maximum $( T_e^{\max} )$, fourni par le moteur thermique.

**8.** Dispositif de synchronisation selon la revendication 7, **caractérisé en ce que**, si le couple ($T_e$) demandé à la machine électrique (7) est inférieur à un couple minimum $( T_e^{\min} )$ on active un premier bloc désaturateur de manière à freiner aussi avec le moteur thermique jusqu'à ce que le couple (Te) devienne supérieur au couple minimum $( T_e^{\min} )$.

**9.** Dispositif de synchronisation selon la revendication 7 ou 8, **caractérisé en ce que**, si le couple ($T_e$) demandé à la machine électrique (7) est supérieur à un couple maximum $( T_e^{\max} )$, on active un deuxième bloc dé-saturateur, de manière à accélérer aussi avec le moteur thermique, jusqu'à ce que le couple ($T_e$) de la machine électrique devienne inférieur au couple max $( T_e^{\max} )$.

**10.** Dispositif de synchronisation selon la revendication 8 ou 9, **caractérisé en ce que** les blocs de dé-saturation délivrent une consigne de couple de moteur thermique ($T_{ice}$) permettant de synchroniser le régime primaire avec le régime secondaire pour satisfaire les conditions d'un parfait accouplement entre un pignon secondaire (11, 12) et son arbre (10).

11. Dispositif de synchronisation selon l'une des revendications 6 à 10, **caractérisé en ce qu'**il comporte un premier bloc de limitation qui maintient la requête de couple électrique ($T_e^{appli}$), entre une valeur de couple minimum ($T_e^{min}$) et une valeur de couple maximum ($T_e^{max}$) de la machine électrique (7).

12. Dispositif de synchronisation selon l'une des revendications 6 à 11, **caractérisé en ce qu'**il comporte un deuxième bloc de limitation délivrant une consigne de couple appliquée au moteur thermique ($T_{ice}^{appli}$) entre des valeurs minimum et maximum ( $T_{ice}^{\min} : T_{ice}^{\max} :$ ) .

**Patentansprüche**

1. Verfahren zur Synchronisation des gemeinsamen Betriebs ($w_p$) zweier konzentrischer Primärwellen (1, 6), eines Hybridantriebs, der auf kumulative Weise das Drehmoment ($T_{ice}$) eines Verbrennungsmotors und das Drehmoment ($T_e$) einer elektrischen Maschine (7) in einem Hybridfunktionsmodus aufnimmt, wobei diese zwei Wellen drehfest durch ein erstes Kopplungsmittel (5) mit dem Betrieb ($w_s$) einer sekundären Übertragungswelle (10) verbunden sind, die mindestens ein Losradritzel trägt, um die Kopplung eines dieser Ritzel (11, 12) mit seiner Welle (10) durch Schließen eines zweiten Kopplungsmittels (13) ohne mechanische Synchronisationselemente zu ermöglichen, **dadurch gekennzeichnet, dass** das Drehmoment ($T_e$) der elektrischen Maschine vorübergehend während der Synchronisationsphase vermindert wird, wenn sein Wert einen oberen Grenzwert ($T_e^{max}$) oder einen unteren Grenzwert ($T_e^{min}$) erreicht.

2. Synchronisationsverfahren nach Anspruch 1, **dadurch gekennzeichnet, dass** das Drehmoment der elektrischen Maschine (7) vermindert wird, wobei auf den Wert des Drehmoments ($T_{ice}$), das vom Verbrennungsmotor geliefert wird, eingewirkt wird.

3. Synchronisationsverfahren nach Anspruch 1 oder 2, **dadurch gekennzeichnet, dass**, wenn das an der elektrischen Maschine (7) angeforderte Drehmoment ($T_e$) kleiner als ein Mindestdrehmoment ($T_e^{min}$) ist, die Primärwellen (1, 6) mit dem Verbrennungsmotor gebremst werden.

4. Synchronisationsverfahren nach Anspruch 2 oder 3, **dadurch gekennzeichnet, dass** wenn das an der elektrischen Maschine (7) angeforderte Drehmoment ($T_e$) größer als ein maximales Drehmoment ($T_e^{max}$) ist, die Primärwellen (1, 6) mit dem Verbrennungsmotor beschleunigt werden.

5. Synchronisationsverfahren nach Anspruch 3 oder 4, **dadurch gekennzeichnet, dass** ein Entsättigungsblock aktiviert wird, um den Verbrennungsmotor zu bremsen oder zu beschleunigen.

6. Vorrichtung zur Synchronisation des gemeinsamen Betriebs ($w_p$) zweier konzentrischer Primärwellen (1, 6), eines Hybridantriebs, der auf kumulative Weise das Drehmoment ($T_{ice}$) eines Verbrennungsmotors und das Drehmoment ($T_e$) einer elektrischen Maschine (7) in einem Hybridfunktionsmodus aufnimmt, wobei diese zwei Wellen drehfest durch ein erstes Kopplungsmittel (5) mit dem Betrieb ($w_s$) einer sekundären Übertragungswelle (10) verbunden sind, die mindestens ein Losradritzel trägt, um die Kopplung eines dieser Ritzel (11, 12) mit seiner Welle (10) durch Schließen eines zweiten Kopplungsmittels (13) ohne mechanische Synchronisationselemente zu ermöglichen, **dadurch gekennzeichnet, dass** sie zwei Entsättigungsblöcke umfasst, die auf den Wert des vom Verbrennungsmotor gelieferten Drehmoments ($T_{ice}$) einwirken, um das Drehmoment ($T_e$) der elektrischen Maschine während der Synchronisationsphase vorübergehend zu vermindern.

7. Synchronisationsvorrichtung nach Anspruch 6, **dadurch gekennzeichnet, dass** die Entsättigungsblöcke das Drehmoment der elektrischen Maschine (7) vermindern, wobei auf den Wert des Drehmoments), eingewirkt wird, wenn das an der elektrischen Maschine (7) angeforderte Drehmoment ($T_e$) größer als ein maximales Drehmoment ($T_e^{max}$) ist, das von dem Verbrennungsmotor geliefert wird.

8. Synchronisationsvorrichtung nach Anspruch 7, **dadurch gekennzeichnet, dass**, wenn das an der elektrischen Maschine (7) angeforderte Drehmoment ($T_e$) kleiner als ein Mindestdrehmoment ($T_e^{min}$) ist, ein erster Entsättigungsblock aktiviert wird, um auch mit dem Verbrennungsmotor zu bremsen, bis das Drehmoment ($T_e$) größer als das Mindestdrehmoment ($T_e^{min}$) wird.

9. Synchronisationsvorrichtung nach Anspruch 7 oder 8, **dadurch gekennzeichnet, dass**, wenn das an der elektrischen Maschine (7) angeforderte Drehmoment ($T_e$) größer als ein maximales Drehmoment ($T_e^{max}$) ist, ein zweiter Entsättigungsblock aktiviert wird, um auch mit dem Verbrennungsmotor zu beschleunigen, bis das Drehmoment ($T_e$) der elektrischen Maschine kleiner als das maximale Drehmoment ($T_e^{max}$) wird.

**10.** Synchronisationsvorrichtung nach Anspruch 8 oder 9, **dadurch gekennzeichnet, dass** die Entsättigungsblöcke einen Drehmomentsollwert eines Verbrennungsmotors ($T_{ice}$) liefern, der es ermöglicht, den Primärbetrieb mit dem Sekundärbetrieb zu synchronisieren, um die Bedingungen einer perfekten Kopplung zwischen einem sekundären Ritzel (11, 12) und seiner Welle (10) zu erfüllen.

**11.** Synchronisationsvorrichtung nach einem der Ansprüche 6 bis 10, **dadurch gekennzeichnet, dass** es einen ersten Begrenzungsblock umfasst, der die Anforderung eines elektrischen Drehmoments ($T_e^{appli}$) zwischen einem minimalen Drehmomentwert ($T_e^{min}$) und einem maximalen Drehmomentwert ($T_e^{max}$) der elektrischen Maschine (7) hält.

**12.** Synchronisationsvorrichtung nach einem der Ansprüche 6 bis 11, **dadurch gekennzeichnet, dass** sie einen zweiten Begrenzungsblock umfasst, der einen an den Verbrennungsmotor angelegten Drehmomentsollwert ($T_{ice}^{appli}$) zwischen minimalen und maximalen Werten ($T_{ice}^{min}$: $T_{ice}^{max}$:) hält.

**Claims**

**1.** Method of synchronizing the speed ($\omega_p$) common to two concentric primary shafts (1, 6) of a hybrid transmission cumulatively receiving the torque ($T_{ice}$) from a combustion engine and the torque ($T_e$) from an electric machine (7) in a hybrid mode of operation in which these two shafts are rotationally connected by a first coupling means (5), with the speed ($\omega_s$) of a secondary transmission shaft (10) bearing at least one idler pinion, to allow one of these pinions (11, 12) to be coupled to its shaft (10) by closure of a second coupling means (13) with no mechanical synchronizing members, **characterized in that** the torque ($T_e$) of the electric machine is temporarily reduced during the synchronizing phase when its value reaches a ceiling represented by an upper limit value ($T_e^{max}$) or a lower limit value ($T_e^{min}$).

**2.** Synchronizing method according to Claim 1, **characterized in that** the torque of the electric machine (7) is reduced by influencing the value of the torque ($T_{ice}$) supplied by the combustion engine.

**3.** Synchronizing method according to Claim 1 or 2, **characterized in that** if the torque ($T_e$) demanded of the electric machine (7) is below a minimum torque ($T_e^{min}$), the primary shafts (1, 6) are slowed with the combustion engine.

**4.** Synchronizing method according to Claim 2 or 3, **characterized in that** if the torque ($T_e$) demanded of the electric machine (7) is above a maximum torque ($T_e^{max}$), the primary shafts (1, 6) are accelerated with the combustion engine.

**5.** Synchronizing method according to Claim 3 or 4, **characterized in that** a desaturation unit is activated in order to slow or accelerate the combustion engine.

**6.** Device for synchronizing the speed ($\omega_p$) common to two concentric primary shafts (1, 6) of a hybrid transmission cumulatively receiving the torque ($T_{ice}$) from a combustion engine and the torque ($T_e$) from an electric machine (7) in a hybrid mode of operation in which these two shafts are rotationally connected by a first coupling means (5), with the speed ($\omega_s$) of a secondary transmission shaft (10) bearing at least one idler pinion, to allow one of these pinions (11, 12) to be coupled to its shaft (10) by closure of a second coupling means (13) with no mechanical synchronizing members, **characterized in that** it comprises two desaturation units influencing the value of the torque ($T_{ice}$) supplied by the combustion engine so as to temporarily reduce the torque ($T_e$) of the electric machine during the synchronizing phase.

**7.** Synchronizing device according to Claim 6, **characterized in that** the desaturation units reduce the torque of the electric machine (7) by influencing the value of the torque if the torque ($T_e$) demanded of the electric machine (7) is higher than a maximum torque ($T_e^{max}$) supplied by the combustion engine.

**8.** Synchronizing device according to Claim 7, **characterized in that** if the torque ($T_e$) demanded of the electric machine (7) is below a minimum torque ($T_e^{min}$), a first desaturation unit is activated in order to slow down also with the combustion engine until the torque ($T_e$) becomes higher than the minimum torque ($T_e^{min}$).

**9.** Synchronizing device according to Claim 7 or 8, **characterized in that** if the torque ($T_e$) demanded of the electric machine (7) is higher than a maximum torque ($T_e^{max}$), a second desaturation unit is activated so as to accelerate also with the combustion engine until the torque ($T_e$) of the electric machine becomes lower than the max torque ($T_e^{max}$).

**10.** Synchronizing device according to Claim 8 or 9, **characterized in that** the desaturation units deliver a combustion engine torque setpoint ($T_{ice}$) allowing the primary speed to be synchronized with the secondary speed so as to meet the conditions of perfect coupling between a secondary pinion (11, 12) and its shaft (10).

**11.** Synchronizing device according to one of Claims 6 to 10, **characterized in that** it comprises a first limiting unit which keeps the electric torque request

$(T_e^{appli})$ between a minimum torque value $(T_e^{min})$ and a maximum torque value $(T_e^{max})$ for the electric machine (7).

12. Synchronizing device according to one of Claims 6 to 11, **characterized in that** it comprises a second limiting unit delivering a torque setpoint applied to the combustion engine $(T_{ice}^{appli})$ that is between minimum and maximum values $(T_{ice}^{min}: T_{ice}^{max:})$.

**Fig. 1**

**Fig. 2**

**Fig. 3**

Fig. 4

**Fig. 5**

**Fig. 6**

**Fig. 7**

**Fig. 8**

**Fig. 9**

**RÉFÉRENCES CITÉES DANS LA DESCRIPTION**

**Documents brevets cités dans la description**

- DE 102006003715
- WO 2012131259 A
- FR 2933247